# EUROPEAN PATENT SPECIFICATION

(11) **EP 1 319 288 B1**
(45) Date of publication and mention of the grant of the patent: **27.12.2006**
(21) Application number: 00948448.6
(22) Date of filing: 05.07.2000
(51) Int. Cl.: H04L 12/66, G06F 12/00

(54) **RESOURCE SAVING DEVICE AND COUPLING OF A CONNECTION IN A TELECOMMUNICATION SYSTEM**
EINRICHTUNG ZUM SPAREN VON BETRIEBSMITTELN UND KOPPELN EINER VERBINDUNG IN EINEM TELEKOMMUNIKATIONSSYSTEM
DISPOSITIF ECONOMISEUR DE RESSOURCES ET COUPLAGE D'UNE CONNEXION DANS UN SYSTEME DE TELECOMMUNICATIONS

(43) Date of publication of application: 18.06.2003
(73) Proprietor: TELEFONAKTIEBOLAGET LM ERICSSON (publ), 164 83 Stockholm (SE)
(72) Inventor: WISS, Patrik, S-113 53 Stockholm (SE); LARSSON, Gunnar, S-147 34 Tumba (SE); PETERSEN, Lars-Göran, S-147 42 Tumba (SE); EKSTEDT, Ulf, S-133 38 Saltsjöbaden (SE)
(74) Representative: Sjöberg, Mats Hakan
(86) International application number: PCT/SE2000/001441
(87) International publication number: WO 2002/003634

(56) References cited:
- WO-A2-97/30555
- WO-A2-98/36335
- WO-A2-99/48311
- US-A- 5 473 608
- US-A- 5 659 684
- US-A- 5 987 549

## Description

### Field of invention

The present invention relates to a node and to a method of establishing a connection in the node in a telecommunications system in a resource-saving manner. The invention also relates to a telecommunications system that includes the node and to a method in connection therewith.

### Description of the background art

Telecommunications systems that comprise several different types of telephone networks have been developed. The networks may be both circuit switched and packet switched and may include different types of signal formats. The networks, even the packet switched networks, are able to transfer information in real time and, in certain instances, provide services of high quality, for instance a high degree of availability, good audibility and unbroken communication. However, the networks are expensive to administer on the parts of the operators, if the high quality requirement is to be maintained. These costs can be reduced, by replacing existing telecommunications networks with a totally novel packet switched network. This would involve, however, capital expansion. Consequently, efforts have been made to create a gateway through which certain networks can be interconnected while retaining good service quality.

Fulfilment of this desideratum requires a relatively complicated gateway. It has therefore been important that the gateway is made effective in the sense that many connections can be established through a given gateway and that its overall resources can be utilised to the full.

In an article by Stella Sofianopoulou, "Optimum Allocation of Processes in a Distributed Environment: A Process-to-Process Approach" in J. Opl. Res. Soc. Vol. 41, No. 4, pp. 329-337, 1990, there is a theoretical discussion of how processors shall be chosen in a telecommunications system in order to handle a number of processes optimally. The processes to be handled are associated with the setup of a telephone connection on the one hand and to the internal work of the processors on the other hand. More specifically, the article deals with the number of processors required to handle effectively a given number of processes.

U.S. Patent Specification No. 6,009,507 describes a computer system that includes a number of signal processors tied to a host computer. One of the signal processors is subsequently allocated a number of tasks, such that the processor will be utilised to a maximum. When this processor has become fully loaded with a task, the system selects a new processor for finalising the tasks.

International Patent Application WO 99/35773 describes a system that includes processors, each of which processes call connections. Data for these connections is distributed among the processors by a resource manager.

European Patent Application EP 0 366 344 B1 describes a system that includes a plurality of nodes each having a respective processor. These processors shall deal with queries regarding the execution of certain tasks. The processors have a determined maximum capacity and the total work load is divided with the aid of processor addresses. The addresses are recorded on a list and in order to avoid overloading of the processors a processor is removed from the list when its load exceeds a threshold value and is replaced on the list when its load has dropped beneath another threshold value.

### Summary of the invention

The present invention addresses a problem relating to coupling into one or more transfer nodes of a telecommunications system functions that are required to establish a connection and doing so limit the extent to which resources are consumed.

Another problem resides in keeping line times and delays in the transmission at a low level.

The problem is solved in the following way. The functions are disposed in the transfer node on a carrier in a predetermined structure. Two functions included in a connection are chosen by virtue of the nearness to one another in said structure, in the sense that only small resources are consumed in order to utilise the functions together.

Somewhat more specifically, the problem is solved in the following way. The functions in the transfer nodes are addressed and each have an hierarchical address which is mirrored in the structure of the carriers. The functions necessary for a connection are switched by the transfer node in a sequential order in the connection. The transfer node uses the hierarchical address to find two consecutive functions that are so located on the carriers as to enable them to be utilised together and doing so require only a small amount of the resources available. These resources include transmission capacity, signal processor capacity and switching capacity.

One object of the present invention is thus to set-up a telecommunications connection between subscribers through the medium of at least one transfer node and doing so utilise the internal resources of said node effectively. The subscribers may be located in one and the same network or in different networks connected to the node.

Another object of the invention is to keep line times and delays in the transmission short.

The invention affords the advantage of using the resources of the transfer nodes effectively.

Another advantage is that delays and line times in transmission are kept short.

The invention will now be described in more detail with reference to preferred embodiments thereof and also with reference to the accompanying drawings.

### Brief description of the drawings

- Figure 1: illustrates a telecommunications system.
- Figure 2: is a block diagram of a transfer node.
- Figure 3: is a flowchart illustrating the establishment of a connection from a calling subscriber to a gateway.
- Figure 4: is a flowchart illustrating coupling of a telecommunications function into the connection shown in Figure 3.
- Figure 5: is a flowchart illustrating coupling the connection from the gateway to a further node in the telecommunications system.
- Figure 6: is a flowchart illustrating coupling of a connection over more than one gateway in the telephone system.
- Figure 7: shows views over parts of the gateway.
- Figure 8: is a block diagram showing the construction of one part of a gateway.
- Figure 9: is a block diagram illustrating an alternative construction of one part of a gateway.
- Figure 10: is a block diagram showing sequential coupling of functions in a connection.
- Figure 11: is a block diagram including a hierarchical address.
- Figure 12: is a block diagram including a hierarchical address.
- Figure 13: is a flowchart for selection of a function in a connection.
- Figure 14: is yet another flowchart for selection of a function in a connection.
- Figure 15: is a further flowchart for selection of a function in a connection.

### Description of preferred embodiments

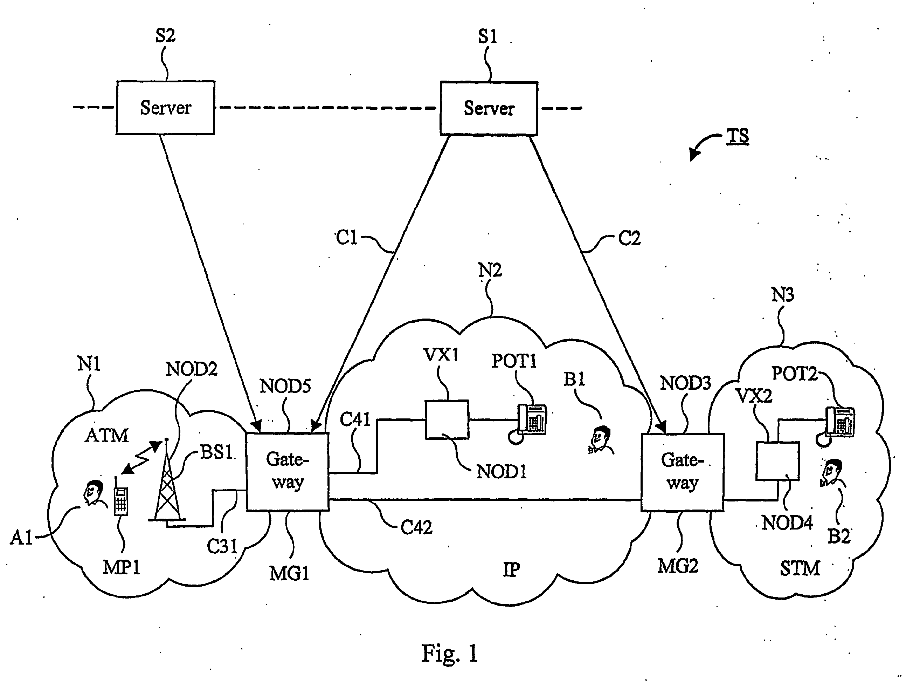

Figure 1 shows, by way of example, part of a telecommunications system TS. The system includes a first network N1, which is an ATM network in the illustrated case, a second network N2, which is an IP network, and a third network N3, which is an STM network. The designation ATM stands for Asynchronous Transfer Mode in the present case. The second network N2, is connected to the first network N1 through the medium of a first gateway MG1 on the one hand, and to the third network N3 through a second gateway MG2 on the other hand. The telecommunications system also includes a control server S1 which functions to control the set-up of connections. The server S1 is coupled to the gateway MG1 via a connection C1, and to the gateway MG2 via a connection C2. Also shown in the figure are other servers, for instance the server S2, that are included in the telecommunications system and, in the illustrated example, connected to the gateway MG1. Present in the network N1 is a first telephone subscriber A1 who is in possession of a mobile telephone MP1 which can be connected to its network through a base station BS1. The base station is connected to the gateway MG1 via a connection C31. Present in the network M2 is a second subscriber B1 who, which, possesses a typical circuit-switched telephone apparatus POT1, which is connected to the gateway MG1 via a telephone switching centre or exchange VX1. The mobile telephone MP1 and the telephone apparatus POT1 may be connected to one another via the gateway MG1, so that the subscribers A1 and B1 are able to converse with one another. Present in the third network N3 is a third subscriber B2 which possesses a telephone POT2 that is connected to the second gateway MG2 via an exchange VX2. The subscriber B2 can be connected to the second subscribers via the gateway MG2. The construction of the gateways MG1 and MG2 and the manner in which coupling is effected will be described in more detail below with reference to a few exemplifying embodiments.

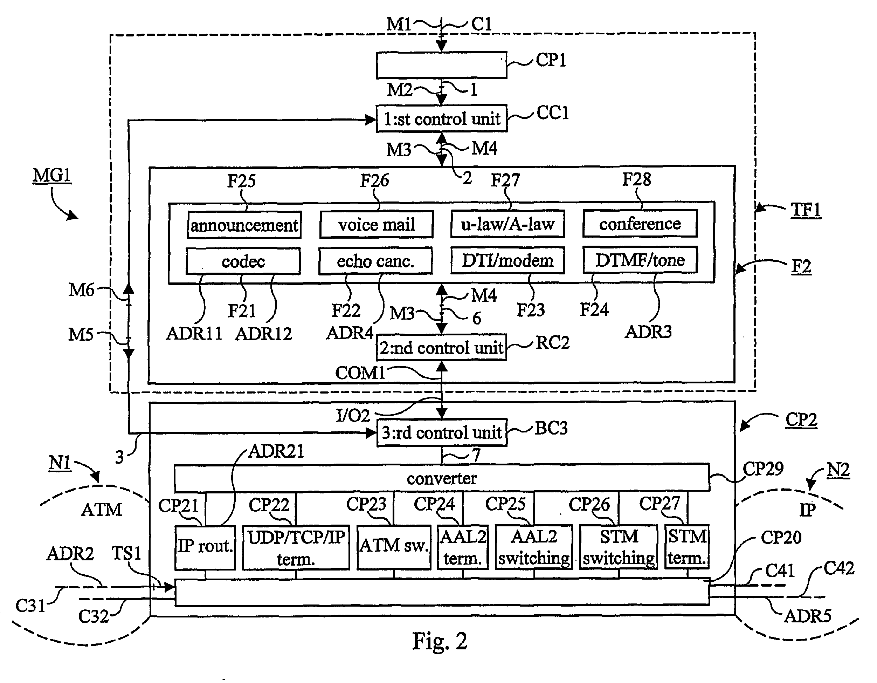

Figure 2 illustrates the logic construction of the gateway MG1. This gateway includes two main parts, a telecommunications function section TF1 and an interface block CP2. The telecommunications function section includes a function part F2 which has function devices that include telecommunications functions F21-F28 that are utilised in telecommunications connections. According to the illustrated example, the function F21 is an encoder/decoder function. F22 is an echo canceller, the function F23 is a modem, the function F24 generates a tone signal which commands a subscriber ringing signal, the function F25 is a message function that generates spoken standard messages, the function F26 enables a subscriber to speak-in a voice message, the function F27 converts between digital u-layers and A-layers and the function F28 attends to conference connections. The telecommunications function section TF1 also includes a signal processing unit CP1, which is connected to the server S1 through the connection C1, and a first control unit CC1 for controlling the set-up of a connection internally in the gateway. The first control unit CC1 is connected to the signal processing unit CP1 through an interface 1, and also to the function block F2 through an interface 2. The function block F2 includes a second control unit RC2, which is connected to the function devices that include the telecommunications functions F21-F28 through an interface 6 and which controls the allocation of the resources in these telecommunications functions. Each of the different telecommunications functions is present in several mutually specimens.

The interface block CP2 includes a physical line interface CP20 which has external connections C31, C32, C41 and C42. Included in the block CP2 is a signal format converter CP29, function devices that include switch and trunk functions CP21-CP27 for dealing with the transformation of different signal formats on signals switched via the external connections. The block CP2 also includes a third control unit BC3 which is connected to the signal format converter CP29 through an interface 7 and to the second control unit RC2 through an interface I/02, and is also connected to the first control unit CC1 through an interface 3. According to the illustrated embodiment, the interface block CP2 has the following switch and trunk functions. The function CP21 is an IP path selector, the function CP2 terminates IP, TCP and UDP, the function CP23 couples ATM cells, the function CP24 terminates AAL2 (ATM Adaptation Layer type 2), the function CP25 switches the AAL2 packet, the function CP26 couples STM channels, and the function CP27 terminates STM channels. Each of the switch and trunk functions is present in several specimens.

The aforesaid parts in the gateway MG1 have the following functions:

The signal processing unit C*p*1 exchanges signals M1 with the server S1 via the connection C1. Among other things, the unit is responsible for security and authorisation functions, confirms that messages have been received, registers incoming and outgoing messages, and acknowledges status changes that have occurred in the gateway to the server. The signal M1 has two parts, one part that includes an address header and one part that includes the actual payload, this latter being divided up into different packets. The signal processing unit CP1 separates the address header on a received signal and then forwards the packet payload to the first control unit CC1 via the interface 1.

The first control unit CC1 receives the signal packet, a signal M2, from the signal processing unit CP1 and, on the basis thereof, requests the requisite function from the telecommunications functions F21-F28. The first control unit activates or deactivates external connections, as evident from the signal M2, and activates or deactivates internal connections between the telecommunications function and the end point of the external connections.

The second control unit RC2 manages the earlier mentioned telecommunications functions F21-F28. The second control unit has information relating to the number of specimens of a given available telecommunications function. It also includes information as to where the functions are situated in a carrier structure that carries the function devices, in other words the control unit has the function addresses of the telecommunications functions. The first control unit CC1 requests from the second control unit one of said telecommunications functions through the medium of a signal M3. The second control unit sends to the first control unit a function address of the telecommunications function, including information concerning the localisation of said function on the carriers.

As will be evident from the above description, the telecommunications function section TF1 includes said two internal interfaces 1 and 2. The interface 1 is intended to keep reception and processing of the actual message M1 separate from the operations caused by said message. The first control unit CC1 can reserve the telecommunications functions F21-F28 for a connection, or release said functions when they are no longer required for said connection, through the medium of the interface 2.

The line interface CP20 in the interface block CP2 has different types of physical interfaces with different transmission rates 1.5, 2, 34 or 155 Mbps. The third control unit BC3 can carry out the functions of coupling-in the signal format converter CP29 and the switch and trunk functions, coupling-in one or more of the telecommunications functions, and searching for a free outgoing sub-connection to the next node in the connection and establishing said connection. In order to put this into effect, the third control unit receives from the first control unit a signal M5 that contains information concerning the incoming connection and the function address of the telecommunications function to be coupled-in. The signal M5 may also contain information concerning a node to which a sub-connection shall be established, such as a continuation of the incoming connection. The third control unit BC3 sends to the first control unit CC1 a signal M6 which, among other things, may contain information as to which connection is established to the next node. The signal format converter CP29 having the switch and trunk functions CP21-CP28 converts incoming signal formats to a common signal format COM1 and reconverts from this format to an outgoing signal format for the connection set up to the next node.

One feature of the gateway MG1 is that the telecommunications functions in the function block F2 are unchanged and independent of which network the gateway is connected. New functions can be added, although the functions *per se* shall remain unchanged with time. Another feature of the gateway is that any telecommunications network whatsoever can be connected with the aid of the gateway and corresponding new switch and trunk functions can be added. It is essential that the telecommunications functions and switch and trunk functions can be stored in the form of hardware or software, and that they can be stored anywhere within a respective block. The gateway can also be readily expanded for improved capacity.

The gateway MG1 exploits the fact that the signals on the connection C31 or C32 are each connected to a respective switch and trunk function CP21-CP27 and then converted in the converter CP29 to said common signal format COM1. This converter then converts the signals to a signal format, which is matched to the format used by the switch and trunk functions CP21-CP27 when the signal shall be sent on a sub-connection to the next mode via the connection C41 or C42. One or more of the telecommunications functions F21-F28 can be coupled-in between said two conversions, via the connection I/O2, if such is necessary for the connection. Moreover, an ongoing connection that has been established between the two subscribers A1 and B1 can be broken up/?/ and one or more further telecommunications functions added. Examples of such added functions are the conference function F28 for including further subscribers in the connection or the standard message function F25. All telecommunications functions work on the common signal format COM1, which is the format that the signals have on the connection I/02. When a connection is established via the gateway MG1, it may occur that none of the telecommunications functions in the function block F2 needs to be coupled-in. However, the signals that are transferred have different formats on the input and, as mentioned above, the incoming signal is converted in the converter CP29 to said common signal format, and then reconverted to the outgoing signal format.

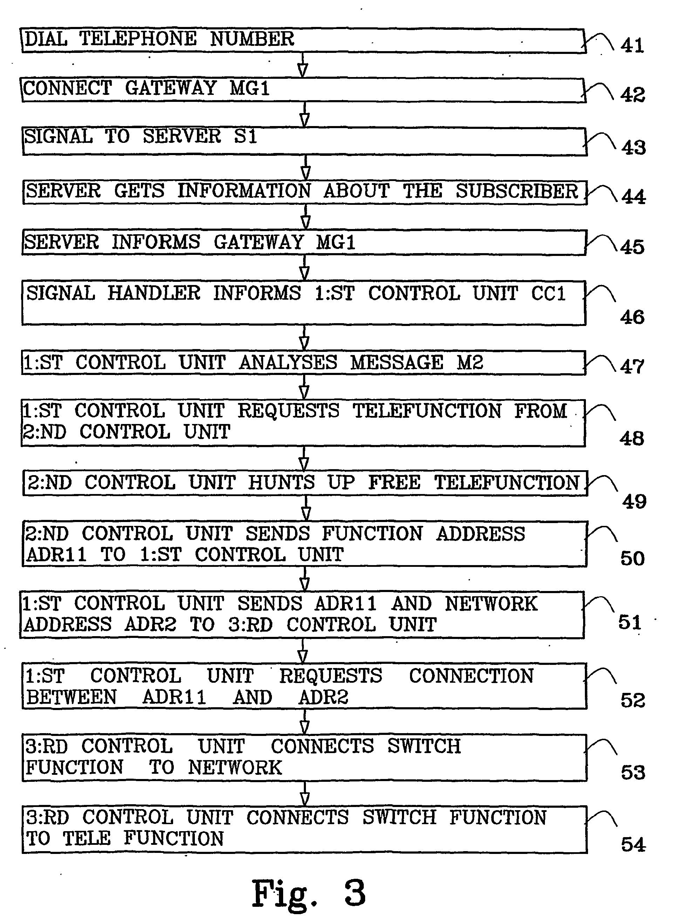

From a logic aspect, the gateway MG1, and also the gateway MG2, are constructed in the manner illustrated in Figure 2 with said three separate co-acting control units CC1, RC2 and BC3. This construction enables the gateway to have the aforesaid properties. The common signal format COM1 may be a format known in this technical field, as is the case in the present embodiment. There is used in this case the format AAL2U, which stands for ATM Adaptation Layer type 2, where ATM, in turn, is an acronym for Asynchronous Transfer Mode. Examples of how the gateway MG1 or MG2 functions will be described below with reference to Figures 3, 4, 5 and 6.

### Coupling of a connection from subscriber A1 to gateway MG1

It was mentioned earlier with reference to Figure 1 that the two subscribers A1
and B1 are connected to one another so as to be able to converse. A first part of this connection involves a call request from subscriber A1 and coupling of the connection to the gateway MG1 with a signal converter, and coupling-in at least one of the telecommunications functions. Figure 3 is a flowchart illustrating the first part of this connection set-up.

The subscriber A1 dials on his mobile MP1 the telephone number of the telephone apparatus POT1 of the subscriber B1 in a conventional manner in accordance with block 41 and is coupled to the gateway MG1 via the base station BS1 over the connection C31 in accordance with block 42. Signalling from the subscriber A1 is switched to the control server S1 over the connection C1 in accordance with block 43. This server detects the signal format possessed by the subscriber A1, in this instance compressed speech, and also detects that the network N1 is an ATM network, all in accordance with block 44.

The server obtains with the call signal from the subscriber A1 certain information concerning the subscriber B1, so as to enable the server to determine the address of the next node that needs to be connected up. The server S1 thus has the information required to establish a connection between the subscribers A1 and B1. The server sends to the gateway MG1 over the connection C1 control signals in the form of the message M1, more specifically to the signal processing unit CP1 in accordance with block 45. The message M1 is a standard protocol that includes an address header and a payload divided into different data packets. The signal processing unit CP1 separates the address header and sends the payload part, or information part, of the control signals containing the message M2 to the first control unit CC1, in accordance with block 46. This information portion of the protocol is analysed by the first control unit, among other things with respect to information concerning those telecommunications functions that are required and information relating to signal format and a network address ADR2 for the connection from the subscriber A1, all in accordance with block 47. Together with the message M3, the first control unit CC1 sends to the second control unit RC2 a request for one of the telecommunications functions, block 48. The mobile telephone MP1 of the subscriber A1 sends encoded speech, which must be decoded in order to be understood by the telephone apparatus POT1 of subscriber B1. The message M3 thus contains a request for the telecommunications function F21 with an encoding/decoding function. The second control unit RC2 searches for a free function, in accordance with block 49, and sends its function address ADR11 with the message M4 to the first control unit CC1, in accordance with block 50. The first control unit now sends, together with the message M5, the function address ADR11 of the free function F21 and sends to the third control unit BC3 the network address ADR2 of the incoming connection in accordance with block 51. Together with the message M5, the first control unit also sends a request asking for the third control unit to couple the network address ADR2 to the address ADR11 of the chosen, free encoding/decoding function F21 in accordance with block 52. In accordance with block 53, the third control unit BC3 connects up that switch and trunk function which corresponds to the network address ADR2, in the illustrated case the function CP24 for AAL2 termination. The function CP24 is coupled together with the telecommunications function F21 in accordance with block 54. Thus, a speech signal TS1, which arrives later on the connection C31 from the subscriber A1, can be received by the function CP24 and transformed to the common signal format COM1 in the signal format converter CP29. The speech signal TS1 can then be decoded via the telecommunications function F21, which operates on the common signal format prior to forwarding the speech signal.

### Connecting-up further telecommunications functions in the gateway MG1

In the example described above, only one of the telecommunications functions is connected up, i.e. the encoding/decoding function F21. As in the present case, it is often necessary to connect-up several telecommunications functions. The subscriber B1 possesses the telephone POT1, which must have a ringing signal. Moreover, an echo may occur in the connection. Consequently, it is necessary to also connect-up the tone generating function F24 and the echo canceller F22.

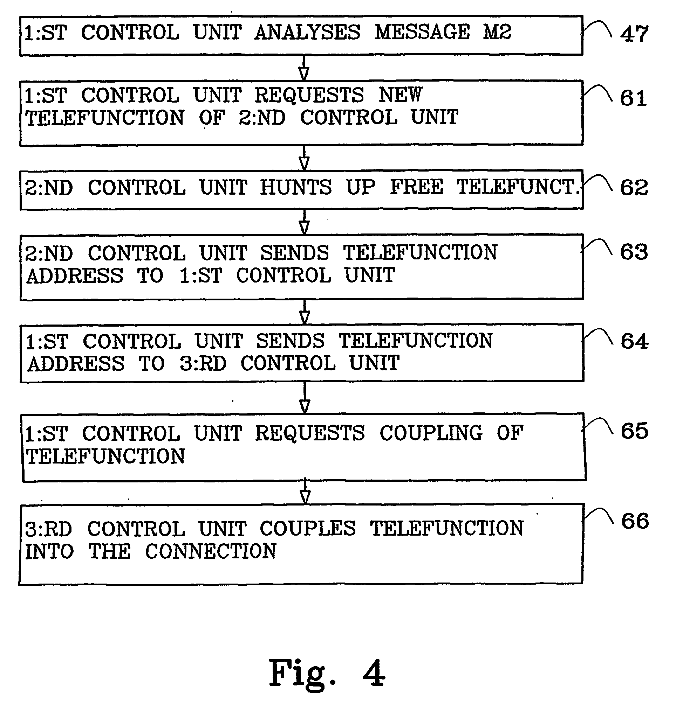

When the subscriber A1 called, a message was sent to the server S1 concerning the called subscriber B1. The server thus has information relating to the node address NOD1 of the subscriber B1, and that this subscriber requires a ringing signal and an echo canceller. This information is sent to the gateway MG1 with the message M1 and forwarded with the message M2 and analysed in the first control unit CC1. The manner in which the further telecommunications functions are coupled in the connection will be described with reference to the flowchart in Figure 4.

In accordance with block 47 in Figure 3, the first control unit CC1 analyses the message M2. This control unit now asks the second control unit RC2 for the next telecommunications function in the message M3 in accordance with block 61. According to the present example, this second telecommunications function is the tone generating function F24. The second control unit searches for a free specimen of this function, in accordance with block 62, and sends the function address ADR3 with the message M4 to the first control unit CC1 in accordance with block 63. This control unit sends to the third control unit BC3 together with the message M5, the function address ADR3 of the telecommunications function F24 in accordance with block 64, and also sends a request for the inclusion of the telecommunications function F24 in the connection. The third control unit BC3 couples this telecommunications function into the connection in accordance with block 66, this telecommunications function being at a stage in which it has already been converted to the common signal format COM1, in accordance with the aforegoing. The first control unit continues the analysis of the message M2 and the procedure according to Figure 3 is repeated when several telecommunications functions are to be connected-up. Such is the case in the present example, in which the telecommunications function F22 for echo cancellation with a function address ADR4 is coupled in the connection when it is on the common signal format COM1.

It will be noted that the coupling procedure in the gateway MG1 is the same as that described in the above two examples, even should the incoming connection on the coupling C31 arrive from a node other than the base station BS1 with the address NOD2. Another gateway, for instance the gateway MG2 with a node address NOD3, is an example of one such alternative. It may be necessary to choose the switch and trunk functions and the telecommunications functions differently, although the actual coupling procedure is unchanged.

### Coupling from the gateway MG1 to the subscriber B1

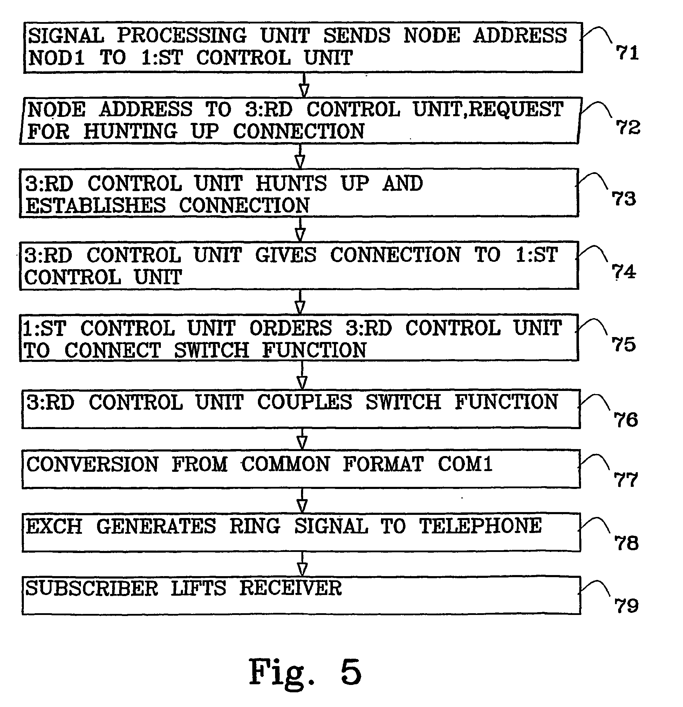

As before mentioned, the server has information concerning the called subscriber B1 and can thereby establish a first node to which the connection from the subscriber A1 shall be coupled. According to one example, the next node may be the next gateway MG2, although in the present embodiment it is the switching centre or exchange that has the node address NOD1 to which the subscriber B1 is connected. The manner in which the connection from the subscriber A1 is switched to the switching centre or exchange VX1 with a sub-connection is described below with reference to Figure 5.

The server S1 is aware that the switching centre VX1 has the node address NOD1 and sends this address to the signal processing unit CP1 together with the message M1. In turn, said unit sends the node address NOD1 to the first control unit CC1 together with the message M2, in accordance with a block 71. The first control unit sends, with the message M5, the node address NOD1 to the third control unit BC3 together with a request to search for a free connection to the node, all in accordance with a block 72. The third control unit BC3 searches for a free connection, in the present case the connection C41, and establishes this connection in accordance with block 73. The third control unit sends to the first control unit CC1 information concerning the established connection C41 in a message M6, in accordance with block 74. The first control unit sends a message to the third control unit BC3 commanding said unit to couple-in the switch and trunk functions corresponding to the established connection C41, in accordance with block 75. The third control unit searches for the function CB21 for IP routing with an address ADR21 and couples this function to the telecommunications function last coupled to the connection in accordance with block 76. The signal format converter CP29 converts the common signal format COM1 to a signal format for the established IP connection in accordance with block 77. The switching centre VX1 is now closed and generates on a signal from the telecommunications function F24 a ringing signal to the telephone POT1 in accordance with block 78. The subscriber B1 takes the call by lifting his/her telephone receiver, block 79.

### Coupling of a connection via a further gateway

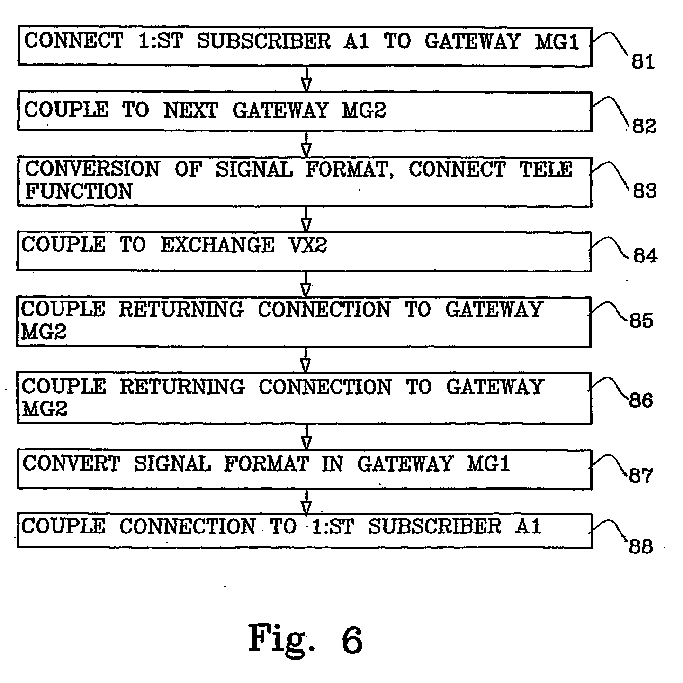

Coupling of a connection between the first subscriber A1 and the third subscriber B2 in the network N3 will now be described broadly with reference to the flowchart of Figure 6. In the first part of the connection from the subscriber A1 to the gateway MG1, solely the function CP24 for AAL2 termination is coupled in the connection and the connection is converted to the common signal format COM1. This first step is indicated with block 81. The gateway MG1 then couples the connection to gateway MG2 via the network N2 in accordance with block 82. Coupling of the connection is effected in a manner similar to that in which coupling to the subscriber B1 is effected in accordance with the description of Figure 5. The difference is that none of the telecommunications functions is coupled in the gateway MG1, and that the server S1 orders coupling to be effected to the node address NOD3 instead of the node address NOD1. A further free IP connection is searched for and is established also by the third control unit BC3. Function CP21, which corresponds to the connection, is coupled-in and the signal format is reconverted to the IP format of the connection. The connection is then received in the gateway MG2 in accordance with block 83. The connection is herewith converted from the IP format to the signal format COM1 and the three telecommunications functions F21, F22 and F24 are coupled-in. It will be noted that it is not until now that the telecommunications functions are coupled in gateway MG2. The connection is then coupled to switching centre VX2 with the node address NOD4 in accordance with block 84 in a manner similar to that described above with reference to Figure 5. The connection is herewith converted to an STM format and the switch and trunk functions CP26 is coupled-in. The retrograde connection is then coupled from the subscriber B2 to the gateway MG2 in accordance with block 85, wherewith the encoding/decoding telecommunications function F21 is coupled-in on the common signal format COM1 subsequent to conversion from the STM format. A free connection to the gateway MG1 with nod address NOD5 is sought by the third control unit in the gateway MG2 and the switch function CP21 is coupled-in for conversion to the IP format, all in accordance with block 86. According to block 87, the signal format is converted from the IP format to the common signal format COM1 in the gateway MG1. A free connection to the base station BS1 is sought for and established by the third control unit BC3, the switch and trunk function CP23 being coupled-in and the signal format reconverted to ATM format, block 88. The couplings carried out in respective gateways in the illustrated example will be more apparent from preceding embodiments.

It will be noted that in the case of the illustrated examples, the different functions F21-F28 and CP21-CP27 have been fetched from within the gateway that is busy at that moment in setting up the connection. However, it is possible for a gateway to fetch a function specimen from another gateway if all its own specimens of the function are occupied. For example, the gateway MG1 can fetch the encoding/decoding function F21 from the gateway MG2 when the gateway MG1 sets up the connection between the subscribers A1 and B1 in accordance with block 49 in Figure 3.

The coupling examples described above relate to coupling between the different networks N1 and N2. However, the gateway MG1 is also able to couple connections between two subscribers in the same network in a manner obvious to the person skilled in this art, for example via the connections C31 and C32 in the network N1. One of the subscribers may be a mobile subscriber, for instance the subscriber A1, while the other subscriber may have a circuit switched telephone apparatus. In this case, it is necessary to couple the encoder/decoder F21 and the ringing tone function F24 into the connection. The gateway may also couple together two different operators that use the same technology, e.g. ATM, in their respective networks.

In the aforegoing, the gateway MG1 and the gateway MG2 found in a user plan in the telecommunications system TS have been described by way of example. These gateways are controlled by servers S1 and S2 found in a control plan in the system. The invention can be applied in a similar manner in a more general coupling node. One alternative to the gateway is a more traditional node that has its control device, corresponding to a server, within the node.

A description of the logic construction of the gateway MG1 has been described above by way of example. A number of examples of setting-up connections in this gateway have also been described. It will be evident that the establishment of connections in this gateway requires many steps and in the majority of cases also requires a number of function devices to be mutually coupled in order to connect-up the telecommunications functions and the switch and trunk functions. An aim of the present invention is to enable this mutual coupling of the function devices to be both effective and resource lean. It is important in this regard that the function devices coupled together in a gateway lie close to one another in the sense that only a slight amount of available resources will be consumed in utilising the functions together. The purely physical construction of the gateway is thus important. It is also important that these function devices can be readily found in the gateway when they are to be coupled into the connection.

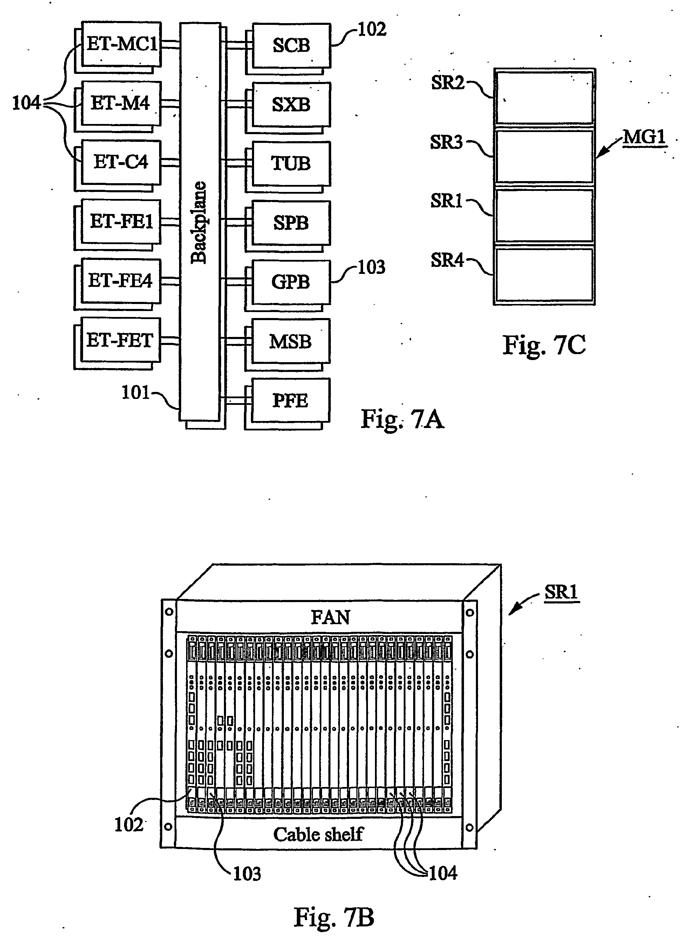

The hardware construction for the gateway MG1 will be described broadly with reference to Figures 7A, 7B and 7C, i.e. a description will be given of the carriers that carry the function devices of the gateway. Figure 7A shows the hardware structure in a magazine. This magazine includes a back plane 101 to which different circuit boards are connected. Examples of circuit boards include a board that has a switch core 102 (SCB = Switch Core Board), a general purpose board (GPB), or a board 104 that carries the aforesaid telecommunications functions F21-F28. As indicated in Figure 7B, the boards are inserted typically in a magazine SR1 whose rear side includes the back plane 101. The gateway MG1 is comprised of one or more magazines, in the illustrated case the magazines SR1, SR2, SR3 and SR4, which are collected to form a unit in accordance with Figure 7C and whose different back planes are joined together.

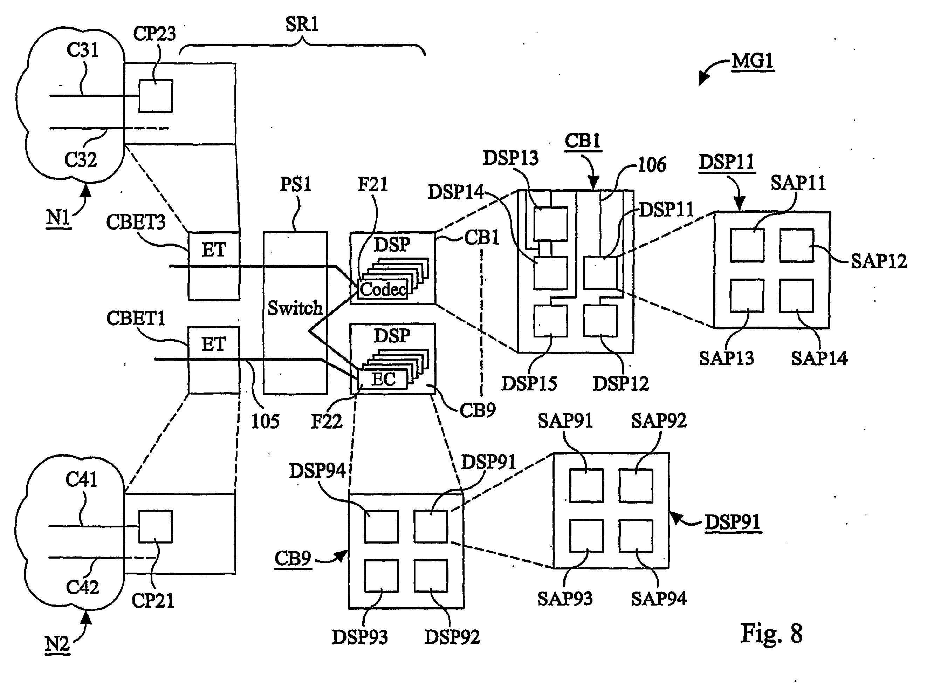

Figure 8 shows an example of how the function devices for the telecommunications functions and switch and trunk functions are arranged on the circuit boards in the magazines SR1-SR4, which is one example of the carriers of the function devices. A circuit board CBET1 for switch and trunk functions carries the IP routing function CP21, and a circuit board CBET23 carries the ATM switching function CP23. These two circuit boards are placed in the magazine SR1. The figure also shows in somewhat more detail how the function CP23 is joined to the connection C31 and the function CP21 is joined to the connection C41. Circuit boards CB1...CB9 are placed in the same magazine SR1. The circuit board CB1 carries function devices that include a plurality of specimens of the encoder/decoder F21 in Figure 2, and the circuit board CB9 carries function devices that include a plurality of specimens of the echo canceller function F22. The circuit boards can be interconnected by a packet selector PS1, which belongs to the superordinate software of the gateway. This interconnection is shown with a full line 101 drawn between the circuit boards and the packet selector. The figure also shows some of the circuit boards in more detail. The circuit board CB1 is shown with five signal processors DSP11-DSP15 with connections 106. The signal processor DSP11 is shown with four access points SAP11-SAP14. One or more specimens of a telecommunications function, in the example the encoder/decoder F21, is/are accessible via one of said access points, for instance the access point SAP13. The circuit board CB9 has four signal processors DSP91-DSP94, the signal processor DSP91 has four access points SAP91-SAP94 and a number of specimens of the echo canceller F22 can be accessed via the access point SAP 92. Signal processors that include access points are not shown on either the circuit board CBET1 or the circuit board CBET3.

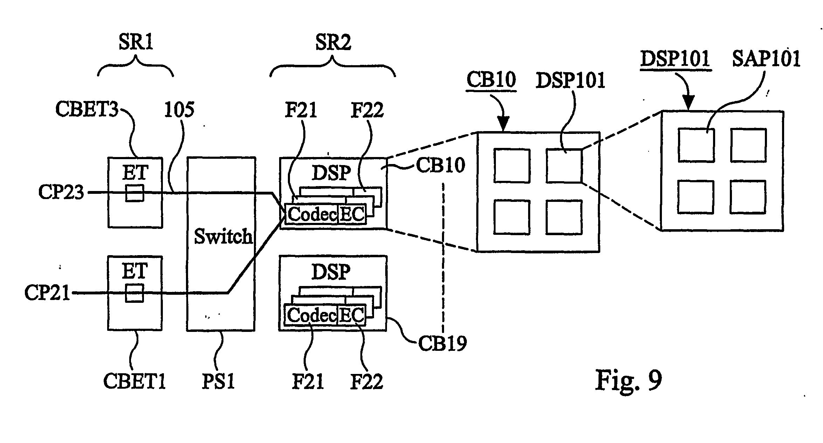

The distribution of the telecommunications functions on the circuit boards described in Figure 8 is designated distributed dispersion, where each circuit board carries solely one type of telecommunications function. An integrated dispersion is shown correspondingly in Figure 9. Similar to the above, the switch and trunk functions are disposed on circuit boards in the magazine SR1, where the circuit board CBET1 carries the function CP21 and the circuit board CBET3 carries the function CP23. Circuit boards CB10-CB19 are placed in the magazine SR2. Similar to the circuit board CB19, the circuit board CB10 carries a number of specimens of the encoder/decoder F21 function together with the echo cancelling function F22. The circuit boards carry signal processors, of which the processor DSP101 is shown, said processors having access points, of which the access point SAP101 is shown. The circuit boards are connected together through the medium of the packet selector PS1.

The aforedescribed distributions of the functions on the circuit boards can be effected as a static distribution such that a given circuit board will constantly have a given number of specimens of one of the functions. The integrated distribution or dispersion may be effected as a dynamic distribution. In this case, the number of one of the telecommunications functions on a circuit board may vary, this number being determined by the prevailing requirement. This is possible because the circuit boards may have standard processors that include in their respective memories a code that identifies several different telecommunications functions. Handling of resources becomes more complicated, and the control units need to handle the resources from several circuit boards as a pool of telecommunications functions. The control units have a list of available and occupied resources, said list not being tied to any specific one of the telecommunications functions.

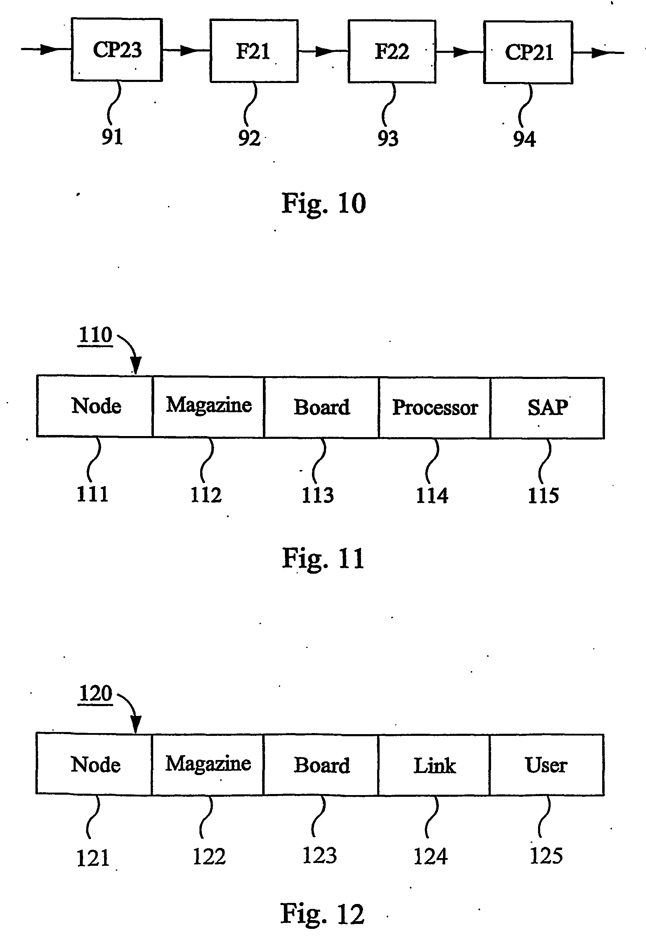

As mentioned above, it is essential that coupling of the various function devices together is effected in a resource saving manner. In this regard, it is essential to restrict the use of the communications resources required to couple the function devices together. When two consecutive function devices are situated in the same gateway, it is the internal communications resources of the gateway that are utilised. The function devices are coupled in the connection in a sequential order, as exemplified in Figure 10. According to block 91, the switch and trunk function CP23 is connected first and then the telecommunications function F21 according to block 92, whereafter the telecommunications function F22 is connected in accordance with block 93, and finally the switch and trunk function CP21 is connected in accordance with block 94. Closer features around similar couplings have been described with reference to Figures 3, 4 and 5. The two blocks 92 and 93 couple-in the consecutive function devices for the telecommunications functions F21 and F22. In order to render this coupling resource-lean and fast, units are selected in the gateway in accordance with the following priority list, where the primary choice is in accordance with point 1, the second-hand choice is in accordance with point 2, and so on:
1. The function devices are accessed via one and the same access point.
2. The function devices are handled by one and the same signal processor.
3. The function devices are handled by signal processors on one and the same circuit board.
4. The circuit boards are seated in one and the same magazine.
   In those cases when a gateway is permitted to fetch functions from another gateway in the telecommunications network TS, the following step is included in the priority list:
5. The magazine belongs to one and the same gateway.

When one of the switch and trunk functions and one of the telecommunications functions shall be chosen sequentially, for instance in accordance with blocks 91 and 92 or in accordance with blocks 93 and 94, the following priority list is used:
1. The function devices belong to one and the same magazine.
2. The function devices belong to one and the same gateway.'

This latter priority list can obviously be extended to include, for instance, an attempt to choose a common circuit board as a first step.

It was mentioned with reference to Figures 3, 4, 5 and 6 that the various function devices CP21-CP27 and F21-F28 have addresses, for instance the addresses ADR21 and ADR3, which are used by the control unit CC1, RC2 and BC3 to mutually couple the functions into a connection. More specifically, the addresses are used to find the different function devices and to be able to choose in accordance with the predetermined priority lists given above. The addresses of the function devices are therefore hierarchically arranged, as will be described below with reference to Figures 11 and 12. Figure 11 is a block diagram showing a structure of an address 110 to the telecommunications functions F21-F28. A block 111 denotes in which node the function is stored, for instance in gateway MG1. A block 112 denotes one of the magazines in said node, for instance the magazine SR1, a block 113 denotes one of the circuit boards in said magazine, for instance the circuit board CB1, a block 114 denotes one of the processors on said board, for instance the processor DSP11, and a block 115 denotes one of the access points, for instance the access point SAP11. The addresses of the telecommunications functions, for instance the addresses ADR3 and ADR11, have this structure. Figure 12 is a block diagram showing a structure for an address 120 of the switch and trunk functions CP21-CP27. A block 121 denotes the node in which the function is stored, e.g. gateway MGW1, a block 122 denotes one of the magazines, e.g. the magazine SR1, and a block 123 denotes one of the circuit boards in said magazine, e.g. the circuit board CBET3. In addition to the position of the functions, the address also denotes one of the connections that can be found to the function device concerned, through a block 124, and a link user is denoted by a block 125. The address ADR21 earlier used has this structure.

It will be noted that the hierarchical address structure denoted in Figures 11 and 12 is adapted for the hierarchical structure of the carriers described with reference to Figures 8 and 9. Other carrier structures may come into question when, for instance, each circuit board has only one processor. The block 114, "Processor", is then omitted from the hierarchical address. The hierarchical address structure is adapted to the hierarchical structure of the carriers.

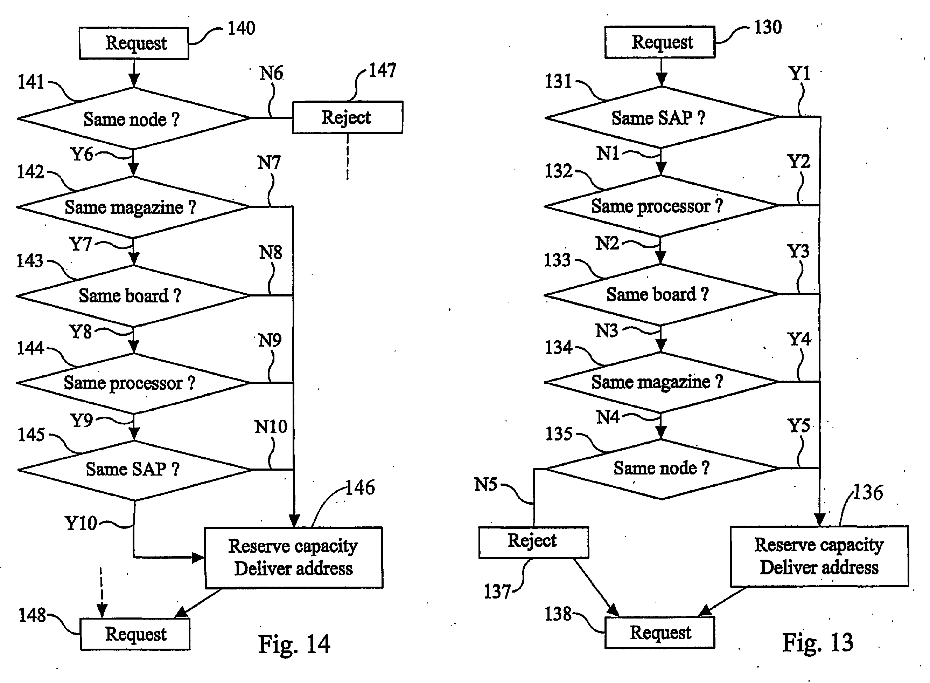

It has been described with reference to Figures 3-6 how the addresses are used to couple-up a connection. The manner in which the hierarchical structure of the addresses according to Figures 11 and 12 are used to connect the function devices in accordance with the above priority lists will now be described in more detail with reference to Figures 13, 14 and 15.

Figure 13 takes as its starting point the case when one of the telecommunications functions shall be coupled-in the connection, for instance when a specimen of the telecommunications function F22 according to block 93 in Figure 10 shall be coupled-in. In a first step, the process begins with the second control unit RC2 asking the first control unit CC1 to couple-in the function F22 in a first step 130. This request contains a preceding address in the chain, i.e. the address of the telecommunications function F21 in block 92. In a step 131, the second control unit checks whether or not the access point for the telecommunications function F21, block 115 in Figure 11, can be used. In this regard, the control unit checks whether or not a specimen of the telecommunications function F22 is available from this access point, and whether or not there is available sufficient processor capacity for handling the function. If an affirmative answer Y1 is given, the processor capacity is reserved and the access point address is delivered to the first control unit CC1, in accordance with block 136. If the answer is negative N1, the second control unit RC2, in block 132, ascertains in a corresponding manner whether or not the signal processor has a specimen of the telecommunications function F21, block 114 in Figure 11, that may be used. If the answer is affirmative Y2, the process capacity is reserved in a corresponding manner and the address, now with another access point, is delivered to the first control unit, block 136. In the case of a negative answer N2, the procedure is repeated in a block 133 with checking whether or not a specimen of the telecommunications function F22 is found available on the circuit board, block 113 in Figure 11, and whether or not the necessary processor capacity is available. In the case of an affirmative Y3, the capacity is reserved and the address is delivered, this time with an access point on another processor. In the case of a negative answer M3, the procedure is repeated still one more time in accordance with block 134, wherein the second control unit checks whether or not the magazine or the telecommunications function F21 has available a specimen of the telecommunications function F22 with an address according to block 112, and whether or not processor capacity is available. In the case of an affirmative answer Y4, the address is delivered to the first control unit as in the earlier case, in accordance with block 136, and the processor capacity is reserved. The address delivered this time is the address of an access point for a processor on a circuit board in the magazine that carries the function F21. In the case of a negative answer N4, the second control unit checks finally whether an available specimen of the function F22 is found in the node as a whole, with the address 111, and also checks for sufficient processor capacity. In the case of an affirmative answer Y5, the address of an access point found in the node is delivered, in accordance with block 136. If a negative answer N5 is given, the request from the first control unit concerning the telecommunications function F22 is rejected, in accordance with block 137. The procedure has thus resulted in either an address according to block 136 or a rejection according to block 137, and a new request can be processed in accordance with a block 138.

As an alternative to the rejection in block 137, there may be sought another node which may have a specimen of the function desired available. The address of this access point, including the address of the node, is delivered to the control unit concerned. In order to exchange the address, it is necessary to couple switch and trunk functions into respective gateways, as evident from the example described with reference to Figure 6.

An alternative to the method illustrated in Figure 13, the flowchart in Figure 14 will now be described in brief. The method takes as its starting point the request for the telecommunications function F22 sent from the first control unit CC1 to the second control unit RC2, in a block 140. According to block 141, the second control unit checks whether or not the requested function F22 is found in the same node as the preceding telecommunications function F21. In the case of a negative reply N6, the request is rejected in accordance with block 147. In the case of an affirmative answer Y6, a check is made to ascertain whether or not the function is found in the same magazine, in accordance with block 142. If the answer to this check is negative N7, the address found in the preceding step 141 is delivered and the requisite processor capacity reserved, as indicated in a block 146. In the case of an affirmative response Y7, a check is carried out in accordance with block 143 to ascertain whether or not the function is found on the same circuit board. In the case of a negative response N8, the address from the preceding step is delivered. In the case of an affirmative response Y8, a check is made to ascertain whether or not the function is found on the same processor, in accordance with block 144. A negative response N9 results in the delivery of the address from the preceding step 143. An affirmative response Y9 causes a check to be made in accordance with a block 145, to ascertain whether or not a specimen of the telecommunications function F22 requested is found on the same access point as the previous telecommunications function F21. In the case of a negative response N10, the address found in the preceding step is delivered, and in the case of an affirmative response Y10 the address just found is delivered and the processor capacity is reserved, see block 146. A new request can be handled in accordance with a block 148. When the telecommunications function can be fetched from another node, the method is begun with a corresponding request.

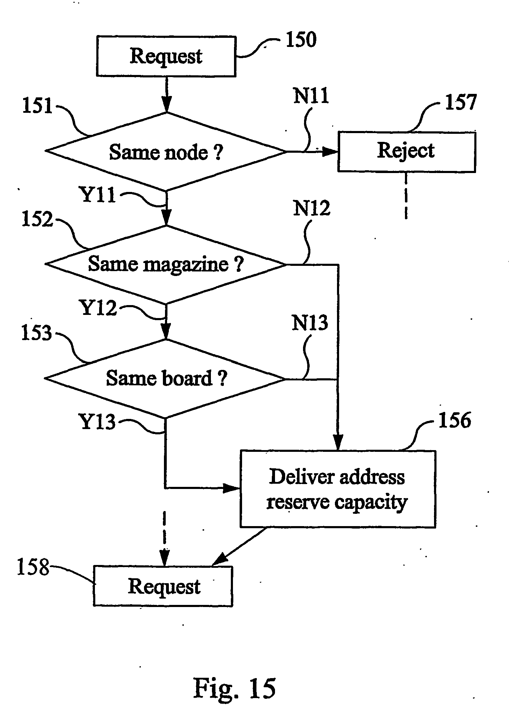

An example of how the priority list shall be used to find a conveniently placed specimen of the switch and trunk function CP21 in Figure 10 will now be described broadly with reference to Figure 15. The switch and trunk function CP21 has a hierarchical address having a structure shown in Figure 12. In this case, it is the third control unit BC3 that receives a request from the first control unit CC1 asking for an address to the function concerned. This function shall lie as close as possible to the preceding function, i.e. the telecommunications function F22. The method commences with a question from the third control unit in a block 150. The third control unit BC3 performs in a block 151 a check to ascertain whether or not an available specimen of the function CP21 is found in the same node as that in which the telecommunications function F22 is situated, and whether or not the requisite processor capacity is available. In the case of a negative reply N11, the request is rejected in accordance with a block 157. In the case of an affirmative response Y11, the control unit BC3 checks, in accordance with a block 152, whether or not there is an available specimen of the function CP21 in the same magazine as the telecommunications function. In the case of a negative response N12, the third control unit BC3 delivers, in accordance with block 156, the address of the specimen of the function CP21 found in block 151. The receiver is the first control unit CC1, as in the earlier case. In the case of an affirmative reply Y12, the third control unit checks, in accordance with a block 153, whether or not a specimen of the function CP21 is found on the same circuit board as that which carries the telecommunications function F22. In the case of a negative response N13, the third control unit BC3 delivers the address of the specimen found according to block 152. In the case of an affirmative response Y13, the address found is delivered to the first control unit CC1 in accordance with block 153, together with information concerning reserved processor capacity, block 156. According to block 158, a new request can be handled. According to one alternative to the method illustrated in Figure 15, the method steps can be taken in the reverse order, in other words in the following order: circuit board, magazine, node. This corresponds to the order described with reference to Figure 13.

There has been described with reference to Figure 2 a gateway MG1, which is used as an example of a coupling node where the present invention is applied. It will be observed that the invention can be applied in a coupling node of some other design. An example of such a design is one in which the converter CP29 in Figure 2 is constructed as one of the telecommunications functions in the function block F2. Another example of the design of the coupling node is one in which all of the functions, both telecommunications functions F21-F28 and switch and trunk functions CP21-CP27 are collected on one unit and controlled by a single central control unit. This results in a somewhat simpler but less flexible coupling node construction.

## Claims

1. A coupling node in telecommunications systems for coupling connections in the telecommunications system (TS), wherein said node (MG1) includes:
- couplings (C1, C41) for said connections and a coupling (C1) for a server (S1);
- function devices (CP21-CP27; F21-F28) having functions intended for said connections, said function devices having hierarchical addresses (110,120);
- carriers (SR1, CB1-CB9, DSP11-DSP15, SAP11-SAP14) which carry said function devices, said function devices being disposed in a hierarchical structure through the medium of said carriers;
- internal communications resources (101, 105, 106) for said function devices; and
- a selector device (CC1, RC2, BC3; PS1) which is adapted to couple-in said function devices in response to a signal (M1) from the server (S1),
**characterised in that** said hierarchical addresses (110, 120) of the function devices correspond to the hierarchical structure of the function devices; **in that** the selector device is adapted to select two of the function devices (F21, F22; F22, CP21) for one of the connections with consecutive functions of said functions in said connection with the aid of said hierarchical addresses (110, 120) such as to limit the extent to which the internal communications resources (I/O2, 105, 106) are used to interconnect said two function devices.

2. A coupling node according to Claim 1, **characterised in that** the function device carriers include at least one magazine (SR1) with circuit boards (CB1-CB9) which are interconnected via a back plane (101) in the magazine and which carry processors (DSP11-DSP15) having access points (SAP11-SAP14), wherein the selector device (CC1, RC2, BC3; PS1) is adapted to select said two function devices in one and the same magazine (SR1).

3. A coupling node according to Claim 1, **characterised in that** the carriers of the function devices (F21-F28, CP21-CP27) include at least one magazine (SR1) with circuit boards (CB1-CB9) which are interconnected via a back plane (101) in the magazine and which carry processors (DSP11-DSP15) that have access points (SAP11-SAP14), wherein the selector device is adapted to select said two function devices on one and the same circuit board.

4. A coupling node according to Claim 1, **characterised in that** the carriers of the function devices (F21-F28, CP21-CP27) include at least one magazine (SR1) having circuit boards (CB1-CB9) which are interconnected through the medium of a back plane (101) in the magazine and which carry processors (DSP11-DSP15) that have access points (SAP11-SAP14), wherein the selector device is adapted to select said two function devices from one and the same signal processor.

5. A coupling node according to Claim 1, **characterised in that** the carriers of the function devices (F21-F28, CP21-CP27) include at least one magazine (SR1) having circuit boards (CB1-CB9) which are interconnected through the medium of a back plane (101) in the magazine and which carry processors (DSP11-DSP15) having access points (SAP11-SAP14), wherein the selector device is adapted to select said two function devices to have one and the same access point in one of the signal processors.

6. A coupling node according to Claim 1, **characterised in that** the carriers of the function devices (F21-F28, CP21-CP27) include at least one magazine (SR1) having circuit boards (CB1-CB9) which are interconnected through the medium of a back plane (101) in the magazine and which carry processors (DSP11-DSP15) having access points (SAP11-SAP14), wherein the selector device is adapted to select said two function devices primarily on the same circuit board and secondarily in the same magazine.

7. A coupling node according to Claim 1, **characterised in that** the carriers of the function devices (F21-F28, CP21-CP27) include at least one magazine (SR1) having circuit boards (CB1-CB9) which are interconnected through the medium of a back plane (101) in the magazine and which carry processors (DSP11-DSP15) having access points, wherein the selector device is adapted to select said two function devices firstly when they are accessible via one and the same access point (SAP11) and secondly when they can be handled by one the same processor, and thirdly so that they can be handled by processors on one and the same circuit board (CB10) and fourthly when the circuit boards are seated in one and the same magazine (SR1).

8. A coupling node according to any one of Claims 2-7, **characterised in that** one of said circuit boards (CB1) carries function devices (F21) that have only one type of function.

9. A coupling node according to any one of Claims 2-7, **characterised in that** one of said circuit boards (CB10) carries function devices (F21, F22) that have at least two different types of functions.

10. A telecommunications system that has at least two coupling nodes (MG1, MG2) according to Claim 1 for coupling a connection in the telecommunications system (TS), **characterised in that** the selector device (CC1, RC2, BC3; PS1) in at least one of said coupling nodes (MG1) is adapted to select said two function devices from one and the same node.

11. A method pertaining to a coupling node in a telecommunications system (TS) for coupling a connection, wherein the node (MG1) comprises:
- connection couplings (C31, C41), and a coupling (C1) for a server (S1);
- function devices (CP21-CP27; F21-F28) having functions intended for said connections; and
- internal communications resources (101, 105, 106) for said function devices,
wherein the method comprises:
- arranging the function devices in a hierarchical structure through the medium of carriers (SR1, CB1-CB9, DSP11-DSP15, SAP11-SAP14) for the function devices; and
- allocating to each of said function devices (F21-F28, CP21-CP27) a hierarchical address (110, 120),
**characterised in that** the method comprises the following method steps:
- allocating said hierarchical addresses (110, 120) such that they correspond to the hierarchical structure of the function devices; and
- selecting with the aid of said hierarchical addresses (110, 120) two of the function devices (F21, F22; F22, CP21) for one of the connections with said two functions consecutive in said connection, such as to limit the extent to which the internal communications resources (I/O2, 105, 106) are used to mutually connect said two function devices.

12. A method according to Claim 11, **characterised in that** the carriers of said function devices (F21-F28, CP21-CP27) include at least one magazine (SR1) having circuit boards (CB1-CB9) which are interconnected through the medium of a back plane (101) in the magazine and which carry processors (DSP11-DSP15) having access points (SAP11-SAP14), wherein the method includes selecting two function devices in one and the same magazine (SR1).

13. A method according to Claim 11, **characterised in that** the carriers of said function devices (F21-F28, CP21-CP27) include at least one magazine (SR1) having circuit boards (CB1-CB9) which are interconnected through the medium of a back plane (101) in the magazine and which carry processors (DSP11-DSP15) having access points (SAP11-SAP14), wherein the method includes selecting said two function devices on one and the same circuit board.

14. A method according to Claim 11, **characterised in that** the carriers of said function devices (F21-F28, CP21-CP27) include at least one magazine (SR1) having circuit boards (CB1-CB9) which are interconnected through the medium of a back plane (101) in the magazine and which carry processors (DSP11-DSP15) having access points (SAP11-SAP14), wherein the method includes selecting said two function devices in the same signal processor.

15. A method according to Claim 11, **characterised in that** the carriers of said function devices (F21-F28, CP21-CP27) include at least one magazine (SR1) having circuit boards (CB1-CB9) which are interconnected through the medium of a back plane (101) in the magazine and which carry processors (DSP11-DSP15) having access points (SAP11-SAP14), wherein the method includes selecting said two function devices through the same access point in one of the processors.

16. A method according to Claim 11, **characterised in that** the carriers of said function devices (F21-F28, CP21-CP27) include at least one magazine (SR1) having circuit boards (CB1-CB9) which are interconnected through the medium of a back plane (101) in the magazine and which carry processors (DSP11-DSP15) having access points (SAP11-SAP14), wherein the method includes selecting said two function devices firstly (153) on one and the same circuit board and secondly (152) in one and the same magazine.

17. A method according to Claim 11, **characterised in that** the carriers of said function devices (F21-F28, CP21-CP27) include at least one magazine (SR1) having circuit boards (CB1-CB9) which are interconnected through the medium of a back plane (101) in the magazine and which carry processors (DSP11-DSP15) having access points (SAP11-SAP14), wherein the method includes selecting said two function devices firstly (131) by accessing via the same access point (SAP11), secondly (131) so that they are handled by the same processor (DSP101), thirdly (133) so that they are handled by processors on the same circuit board (CB10), and fourthly (134) from circuit boards that are seated in one and the same magazine (SR1).

18. A method according to any one of Claims 12-17, **characterised in that** one of the circuit boards (CB1) carries function devices (F21) that have only one type of function.

19. A method according to any one of Claims 12-17, **characterised in that** one of the circuit boards (CB1) carries function devices (F21, F22) that have at least two different types of functions.

20. A method pertaining to telecommunications systems having at least two coupling nodes (MG1, MG2) according to Claim 1 for coupling a connection in the telecommunications system (TS), **characterised in that** the method includes selecting (135; 141; 151) said two function devices from one and the same node (MG1).

## Patentansprüche

1. Ein Kopplungsknoten in Telekommunikationssystemen zum Koppeln von Verbindungen in dem Telekommunikationssystem (TS), wobei der Knoten (MG1) enthält:
- Kopplungen (C1, C41) für die Verbindungen und eine Kopplung (C1) für einen Server (S1);
- Funktionseinrichtungen (CP21-CP27; F21-F28) mit Funktionen, die für die Verbindungen gedacht sind, wobei die Funktionseinrichtungen hierarchische Adressen (110, 120) haben;
- Träger (SR1, CB1-CB9, DSP11-DSP15, SAP11-SAP14), die die Funktionseinrichtungen tragen, wobei die Funktionseinrichtungen in einem hierarchischen Aufbau durch das Medium der Träger angeordnet sind;
- interne Kommunikationsressourcen (101, 105, 106) für die Funktionseinrichtungen, und
- eine Selektoreinrichtung (CC1, RC2, BC3; PS1), die angepasst ist, die Funktionseinrichtungen als Reaktion auf ein Signal (M1) von dem Server (S1) einzukoppeln,
**gekennzeichnet dadurch, dass** die hierarchischen Adressen (110, 120) der Funktionseinrichtungen dem hierarchischen Aufbau der Funktionseinrichtungen entsprechen; **dadurch**, dass die Selektoreinrichtung angepasst ist, zwei der Funktionseinrichtungen (F21, F22; F22, CP21) für eine der Verbindungen mit fortlaufenden Funktionen der Funktionen in der Verbindung mit der Hilfe der hierarchischen Adressen (110, 120) derart auszuwählen, um das Ausmaß zu begrenzen, zu dem die internen Kommunikationsressourcen (I/02, 105, 106) verwendet werden, um die zwei Funktionseinrichtungen miteinander zu verbinden.

2. Ein Kopplungsknoten nach Anspruch 1, **gekennzeichnet dadurch, dass** die Funktionseinrichtungsträger mindestens ein Magazin (SR1) mit Schaltungsplatinen (CB1-CB9) enthalten, die über eine Rückwand (101) in dem Magazin miteinander verbunden sind, und die Prozessoren (DSP11-DSP15) mit Zugangspunkten (SAP11-SAP14) tragen, wobei die Selektoreinrichtung (CC1, RC2, BC3; PS1) angepasst ist, die zwei Funktionseinrichtungen in ein und dem gleichen Magazin (SR1) auszuwählen.

3. Ein Kopplungsknoten nach Anspruch 1, **gekennzeichnet dadurch, dass** die Träger der Funktionseinrichtungen (F21-F28, CP21-CP27) mindestens ein Magazin (SR1) mit Schaltungsplatinen (CB1-CB9) enthalten, die über eine Rückwand (101) in dem Magazin miteinander verbunden sind und die Prozessoren (DSP11-DSP15) tragen, die Zugangspunkte (SAP11-SAP14) haben, wobei die Selektoreinrichtung angepasst ist, die zwei Funktionseinrichtungen in ein und der gleichen Schaltungsplatine auszuwählen.

4. Ein Kopplungsknoten nach Anspruch 1, **gekennzeichnet dadurch, dass** die Träger der Funktionseinrichtungen (F21-F28, CP21-CP27) mindestens ein Magazin (SR1) mit Schaltungsplatinen (CB1-CB9) enthalten, die durch das Medium einer Rückwand (101) in dem Magazin miteinander verbunden sind, und die Prozessoren (DSP11-DSP15) tragen, die Zugangspunkte (SAP11-SAP14) haben, wobei die Selektoreinrichtung angepasst ist, die zwei Funktionseinrichtungen von ein und dem gleichen Signalprozessor auszuwählen.

5. Ein Kopplungsknoten nach Anspruch 1, **gekennzeichnet dadurch, dass** die Träger der Funktionseinrichtungen(F21-F28, CP21-CP27) mindestens ein Magazin (SR1) mit Schaltungsplatinen (CB1-CB9) enthalten, die durch das Medium einer Rückwand (101) in dem Magazin miteinander verbunden sind, und die Prozessoren (DSP11-DSP15) tragen, die Zugangspunkte (SAP11-SAP14) haben, wobei die Selektoreinrichtung angepasst ist, die zwei Funktionseinrichtungen auszuwählen, ein und den gleichen Zugangspunkt in einem der Signalprozessoren zu haben.

6. Ein Kopplungsknoten nach Anspruch 1, **gekennzeichnet dadurch, dass** die Träger der Funktionseinrichtungen (F21-F28, CP21-CP27) mindestens ein Magazin (SR1) mit Schaltungsplatinen (CB1-CB9) enthalten, die durch das Medium einer Rückwand (101) in dem Magazin miteinander verbunden sind, und die Prozessoren (DSP11-DSP15) tragen, die Zugangspunkte (SAP11-SAP14) haben, wobei die Selektoreinrichtung angepasst ist, die zwei Funktionseinrichtungen primär in der gleichen Schaltungsplatine und sekundär in dem gleichen Magazin auszuwählen.

7. Ein Kopplungsknoten nach Anspruch 1, **gekennzeichnet dadurch, dass** die Träger der Funktionseinrichtungen (F21-F28, CP21-CP27) mindestens ein Magazin (SR1) mit Schaltungsplatinen (CB1-CB9) enthalten, die durch das Medium einer Rückwand (101) in dem Magazin miteinander verbunden sind, und die Prozessoren (DSP11-DSP15) tragen, die Zugangspunkte haben, wobei die Selektoreinrichtung angepasst ist, die zwei Funktionseinrichtungen zuerst auszuwählen, wenn sie über ein und den gleichen Zugangspunkt (SAP11) zugreifbar sind, und zweitens, wenn sie durch ein und den gleichen Prozessor gehandhabt werden können, und drittens, dass sie durch Prozessoren in ein und der gleichen Schaltungsplatine (CB10) gehandhabt werden können, und viertens, wenn sich die Schaltungsplatinen in ein und dem gleichen Magazin (SR1) befinden.

8. Ein Kopplungsknoten nach einem beliebigen von Ansprüchen 2-7, **gekennzeichnet dadurch, dass** eine der Schaltungsplatinen (CB1) Funktionseinrichtungen (F21) trägt, die nur einen Typ einer Funktion aufweisen.

9. Ein Kopplungsknoten nach einem beliebigen von Ansprüchen 2-7, **gekennzeichnet dadurch, dass** eine der Schaltungsplatinen (CB10) Funktionseinrichtungen (F21, F22) trägt, die mindestens zwei unterschiedliche Typen von Funktionen aufweisen.

10. Ein Telekommunikationssystem, das mindestens zwei Kopplungsknoten (MG1, MG2) nach Anspruch 1 zum Koppeln einer Verbindung in dem Telekommunikationssystem (TS) hat, **gekennzeichnet dadurch, dass** die Selektoreinrichtung (CC1, RC2, BC3; PS1) in mindestens einem der Kopplungsknoten (MG1) angepasst ist, die zwei Funktionseinrichtungen von ein und dem gleichen Knoten auszuwählen.

11. Ein Verfahren betreffend einen Kopplungsknoten in einem Telekommunikationssystem (TS) zum Koppeln einer Verbindung, wobei der Knoten (MG1) umfasst:
- Verbindungskopplungen (C31, C41), und eine Kopplung (C1) für einen Server (S1);
- Funktionseinrichtungen (CP21-CP27; F21-F28) mit Funktionen, die für die Verbindungen gedacht sind; und
- interne Kommunikationsressourcen (101, 105, 106) für die Funktionseinrichtungen, wobei das Verfahren umfasst:
- Anordnen der Funktionseinrichtungen in einem hierarchischen Aufbau durch das Medium von Trägern (SR1, CB1-CB9, DSP11-DSP15, SAP11-SAP14) für die Funktionseinrichtungen; und
- Zuordnen zu jeder der Funktionseinrichtungen (F21-F28, CP21-CP27) einer hierarchischen Adresse (110, 120),
**gekennzeichnet dadurch, dass** das Verfahren die folgenden Verfahrensschritte umfasst:
- Zuordnen der hierarchischen Adressen (110, 120) derart, dass sie dem hierarchischen Aufbau der Funktionseinrichtungen entsprechen; und
- Auswählen mit der Hilfe der hierarchischen Adressen (110, 120) von zwei der Funktionseinrichtungen (F21, F22; F22, CP21) für eine der Verbindungen mit den zwei Funktionen fortlaufend in der Verbindung derart, um das Ausmaß zu begrenzen, zu dem die internen Kommunikationsressourcen (I/02, 105, 106) verwendet werden, um die zwei Funktionseinrichtungen gegenseitig zu verbinden.

12. Ein Verfahren nach Anspruch 11, **gekennzeichnet dadurch, dass** die Träger der Funktionseinrichtungen (F21-F28, CP21-CP27) mindestens ein Magazin (SR1) mit Schaltungsplatinen (CB1-CB9) enthalten, die durch das Medium einer Rückwand (101) in dem Magazin miteinander verbunden sind, und die Prozessoren (DSP11-DSP15) tragen, die Zugangspunkte (SAP11-SAP14) haben, wobei das Verfahren Auswählen von zwei Funktionseinrichtungen in ein und dem gleichen Magazin (SR1) enthält.

13. Ein Verfahren nach Anspruch 11, **gekennzeichnet dadurch, dass** die Träger der Funktionseinrichtungen (F21-F28, CP21-CP27) mindestens ein Magazin (SR1) mit Schaltungsplatinen (CB1-CB9) enthalten, die durch das Medium einer Rückwand (101) in dem Magazin miteinander verbunden sind, und die Prozessoren (DSP11-DSP15) tragen, die Zugangspunkte (SAP11-SAP14) haben, wobei das Verfahren Auswählen der zwei Funktionseinrichtungen in ein und der gleichen Schaltungsplatine enthält.

14. Ein Verfahren nach Anspruch 11, **gekennzeichnet dadurch, dass** die Träger der Funktionseinrichtungen (F21-F28, CP21-CP27) mindestens ein Magazin (SR1) mit Schaltungsplatinen (CB1-CB9) enthalten, die durch das Medium einer Rückwand (101) in dem Magazin miteinander verbunden sind, und die Prozessoren (DSP11-DSP15) tragen, die Zugangspunkte (SAP11-SAP14) haben, wobei das Verfahren Auswählen der zwei Funktionseinrichtungen in dem gleichen Signalprozessor enthält.

15. Ein Verfahren nach Anspruch 11, **gekennzeichnet dadurch, dass** die Träger der Funktionseinrichtungen (F21-F28, CP21-CP27) mindestens ein Magazin (SR1) mit Schaltungsplatinen (CB1-CB9) enthalten, die durch das Medium einer Rückwand (101) in dem Magazin miteinander verbunden sind, und die Prozessoren (DSP11-DSP15) tragen, die Zugangspunkte (SAP11-SAP14) haben, wobei das Verfahren Auswählen der zwei Funktionseinrichtungen durch den gleichen Zugangspunkt in einem der Prozessoren enthält.

16. Ein Verfahren nach Anspruch 11, **gekennzeichnet dadurch, dass** die Träger der Funktionseinrichtungen (F21-F28, CP21-CP27) mindestens ein Magazin (SR1) mit Schaltungsplatinen (CB1-CB9) enthalten, die durch das Medium einer Rückwand (101) in dem Magazin miteinander verbunden sind, und die Prozessoren (DSP11-DSP15) tragen, die Zugangspunkte (SAP11-SAP14) haben, wobei das Verfahren Auswählen der zwei Funktionseinrichtungen zuerst (153) in ein und der gleichen Schaltungsplatine und zweitens (152) in ein und dem gleichen Magazin enthält.

17. Ein Verfahren nach Anspruch 11, **gekennzeichnet dadurch, dass** die Träger der Funktionseinrichtungen (F21-F28, CP21-CP27) mindestens ein Magazin (SR1) mit Schaltungsplatinen (CB1-CB9) enthalten, die durch das Medium einer Rückwand (101) in dem Magazin miteinander verbunden sind, und die Prozessoren (DSP11-DSP15) tragen, die Zugangspunkte (SAP11-SAP14) haben, wobei das Verfahren Auswählen der zwei Funktionseinrichtungen zuerst (131) durch Zugreifen über den gleichen Zugangspunkt (SAP11), zweitens (131) so, dass sie durch den gleichen Prozessor (DSP101) gehandhabt werden, drittens (133) so, dass sie durch Prozessoren in der gleichen Schaltungsplatine (CB10) gehandhabt werden, und viertens (134) von Schaltungsplatinen, die sich in ein und dem gleichen Magazin (SR1) befinden.

18. Ein Verfahren nach einem beliebigen von Ansprüchen 12-17, **gekennzeichnet dadurch, dass** eine der Schaltungsplatinen (CB1) Funktionseinrichtungen (F21) trägt, die nur einen Typ einer Funktionen aufweisen.

19. Ein Verfahren nach einem beliebigen von Ansprüchen 12-17, **gekennzeichnet dadurch, dass** eine der Schaltungsplatinen (CB1) Funktionseinrichtungen (F21, F22) trägt, die mindestens zwei unterschiedliche Typen von Funktionen aufweisen.

20. Ein Verfahren betreffend Telekommunikationssysteme mit mindestens zwei Kopplungsknoten (MG1, MG2) nach Anspruch 1 zum Koppeln einer Verbindung in dem Telekommunikationssystem (TS), **gekennzeichnet dadurch, dass** das Verfahren Auswählen (135; 141; 151) der zwei Funktionseinrichtungen von ein und dem gleichen Knoten (MG1) enthält.

## Revendications

1. Noeud de couplage dans des systèmes de télécommunications pour coupler des connexions dans le système de télécommunications (TS pour Telecommunications System) dans lequel ledit noeud (MG1) comprend :
- des couplages (C1, C41) pour lesdites connexions et un couplage (C1) pour un serveur (S1) ;
- des dispositifs de fonction (CP21 à CP27 ; F21 à F28) possédant des fonctions destinées auxdites connexions, lesdits dispositifs de fonction possédant des adresses hiérarchiques (110, 120) ;
- des porteurs (SR1, CB1 à CB9, DSP11 à DSP15, SAP11 à SAP14) qui portent lesdits dispositifs de fonction, lesdits dispositifs de fonction étant disposés dans une structure hiérarchique au moyen du support desdits porteurs ;
- des ressources de communication internes (101, 105, 106) pour lesdits dispositifs de fonction ; et
- un dispositif sélecteur (CC1, RC2, BC3 ; PS1) qui est adapté pour coupler lesdits dispositifs de fonction en réponse à un signal (M1) provenant du serveur (S1),
**caractérisé en ce que** lesdites adresses hiérarchiques (110, 120) des dispositifs de fonction correspondent à la structure hiérarchique des dispositifs de fonction ; **en ce que** le dispositif sélecteur est adapté pour choisir deux parmi les dispositifs de fonction (F21, F22 ; F22, CP21) pour une des connexions avec des fonctions consécutives parmi lesdites fonctions dans ladite connexion avec l'aide desdites adresses hiérarchiques (110, 120) de manière à limiter l'étendue de l'utilisation des ressources de communication internes (1/02, 105, 106) pour interconnecter lesdits deux dispositifs de fonction.

2. Noeud de couplage selon la revendication 1, **caractérisé en ce que** les porteurs de dispositifs de fonction comprennent au moins un magasin (SR1) avec des cartes de circuit (CB1 à CB9) qui sont interconnectées par l'intermédiaire d'un fond de panier (101) dans le magasin et qui portent des processeurs (DSP11 à DSP15) possédant des points d'accès (SAP11 à SAP14), dans lequel le dispositif sélecteur (CC1, RC2, BC3 ; PS1) est adapté pour choisir lesdits deux dispositifs de fonction dans un même magasin (SR1).

3. Noeud de couplage selon la revendication 1, **caractérisé en ce que** les porteurs des dispositifs de fonction (F21 à F28, CP21 à CP27) comprennent au moins un magasin (SR1) avec des cartes de circuit (CB1 à CB9) qui sont interconnectées par l'intermédiaire d'un fond de panier (101) dans le magasin et qui portent des processeurs (DSP11 à DSP15) qui possèdent des points d'accès (SAP11 à SAP14), dans lequel le dispositif sélecteur est adapté pour choisir lesdits deux dispositifs de fonction sur la même carte de circuit.

4. Noeud de couplage selon la revendication 1, **caractérisé en ce que** les porteurs des dispositifs de fonction (F21 à F28, CP21 à CP27) comprennent au moins un magasin (SR1) possédant des cartes de circuit (CB1 à CB9) qui sont interconnectées au moyen du support d'un fond de panier (101) dans le magasin et qui portent des processeurs (DSP11 à DSP15) qui possèdent des points d'accès (SAP11 à SAP14), dans lequel le dispositif sélecteur est adapté pour choisir lesdits deux dispositifs de fonction à partir du même processeur de signaux.

5. Noeud de couplage selon la revendication 1, **caractérisé en ce que** les porteurs des dispositifs de fonction (F21 à F28, CP21 à CP27) comprennent au moins un magasin (SR1) possédant des cartes de circuit (CB1 à CB9) qui sont interconnectées au moyen du support d'un fond de panier (101) dans le magasin et qui portent des processeurs (DSP11 à DSP15) qui possèdent des points d'accès (SAP11 à SAP14), dans lequel le dispositif sélecteur est adapté pour choisir lesdits deux dispositifs de fonction pour qu'ils aient le même point d'accès dans l'un des processeurs de signaux.

6. Noeud de couplage selon la revendication 1, **caractérisé en ce que** les porteurs des dispositifs de fonction (F21 à F28, CP21 à CP27) comprennent au moins un magasin (SR1) possédant des cartes de circuit (CB1 à CB9) qui sont interconnectées au moyen du support d'un fond de panier (101) dans le magasin et qui portent des processeurs (DSP11 à DSP15) qui possèdent des points d'accès (SAP11 à SAP14), dans lequel le dispositif sélecteur est adapté pour choisir lesdits deux dispositifs de fonction principalement sur la même carte de circuit et, de manière secondaire, dans le même magasin.

7. Noeud de couplage selon la revendication 1, **caractérisé en ce que** les porteurs des dispositifs de fonction (F21 à F28, CP21 à CP27) comprennent au moins un magasin (SR1) possédant des cartes de circuit (CB1 à CB9) qui sont interconnectées au moyen du support d'un fond de panier (101) dans le magasin et qui portent des processeurs (DSP11 à DSP15) possédant des points d'accès, dans lequel le dispositif sélecteur est adapté pour choisir lesdits deux dispositifs de fonction premièrement quand ils sont accessibles par l'intermédiaire du même point d'accès (SAP11) et, deuxièmement, quand ils peuvent être pris en charge par le même processeur et, troisièmement, de manière qu'ils puissent être pris en charge par des processeurs sur la même carte de circuit (CB10) et, quatrièmement, quand les cartes de circuit sont placées dans le même magasin (SR1).

8. Noeud de couplage selon l'une quelconque des revendications 2 à 7, **caractérisé en ce que** l'une desdites carte de circuit (CB1) porte des dispositifs de fonction (F21) qui possèdent uniquement un type de fonction.

9. Noeud de couplage selon l'une quelconque des revendications 2 à 7, **caractérisé en ce que** l'une desdites cartes de circuit (CB10) porte des dispositifs de fonction (F21, F22) qui possèdent au moins deux types différents de fonctions.

10. Système de télécommunications qui possède au moins deux noeuds de couplage (MG1, MG2) selon la revendication 1 pour coupler une connexion dans le système de télécommunications (TS), **caractérisé en ce que** le dispositif sélecteur (CC1, RC2, BC3 ; PS1) dans au moins un desdits noeuds de couplage (MG1) est adapté pour choisir lesdits deux dispositifs de fonction à partir du même noeud.

11. Procédé concernant un noeud de couplage dans un système de télécommunications (TS) destiné à coupler une connexion, dans lequel le noeud (MG1) comprend :
- des couplages de connexion (C31, C41) et un couplage (C1) pour un serveur (S1) ;
- des dispositifs de fonction (CP21 à CP27 ; F21 à F28) possédant des fonctions destinées auxdites connexions ; et
- des ressources de communication internes (101, 105, 106) pour lesdits dispositifs de fonction,
dans lequel le procédé comprend :
- l'agencement des dispositifs de fonction dans une structure hiérarchique au moyen du support de porteurs (SR1, CB1 à CB9, DSP11 à DSP15, SAP11 à SAP14) pour les dispositifs de fonction ; et
- l'allocation à chacun desdits dispositifs de fonction (F21 à F28, CP21 à CP27) d'une adresse hiérarchique (110, 120),
**caractérisé en ce que** le procédé comprend les étapes de procédé suivantes :
- l'allocation desdites adresses hiérarchiques (110, 120) de telle manière qu'elles correspondent à la structure hiérarchique des dispositifs de fonction ; et
- le choix avec l'aide desdites adresses hiérarchiques (110, 120) de deux des dispositifs de fonction (F21, F22 ; F22, CP21) pour l'une des connexions avec lesdites deux fonctions consécutives dans ladite connexion, de manière à limiter l'étendue de l'utilisation des ressources de communication internes (1/02, 105, 106) pour connecter mutuellement lesdits deux dispositifs de fonction.

12. Procédé selon la revendication 11, **caractérisé en ce que** les porteurs desdits dispositifs de fonction (F21 à F28, CP21 à CP27) comprennent au moins un magasin (SR1) possédant des cartes de circuit (CB1 à CB9) qui sont interconnectées au moyen du support d'un fond de panier (101) dans le magasin et qui portent des processeurs (DSP11 à DSP15) possédant des points d'accès (SAP11 à SAP14), dans lequel le procédé comprend le choix de deux dispositifs de fonction dans le même magasin (SR1).

13. Procédé selon la revendication 11, **caractérisé en ce que** les porteurs desdits dispositifs de fonction (F21 à F28, CP21 à CP27) comprennent au moins un magasin (SR1) possédant des cartes de circuit (CB1 à CB9) qui sont interconnectées au moyen du support d'un fond de panier (101) dans le magasin et qui portent des processeurs (DSP11 à DSP15) possédant des points d'accès (SAP11 à SAP14), dans lequel le procédé comprend le choix desdits deux dispositifs de fonction sur la même carte de circuit.

14. Procédé selon la revendication 11, **caractérisé en ce que** les porteurs desdits dispositifs de fonction (F21 à F28, CP21 à CP27) comprennent au moins un magasin (SR1) possédant des cartes de circuit (CB1 à CB9) qui sont interconnectées au moyen du support d'un fond de panier (101) dans le magasin et qui portent des processeurs (DSP11 à DSP15) possédant des points d'accès (SAP11 à SAP14), dans lequel le procédé comprend le choix desdits deux dispositifs de fonction dans le même processeur de signaux.

15. Procédé selon la revendication 11, **caractérisé en ce que** les porteurs desdits dispositifs de fonction (F21 à F28, CP21 à CP27) comprennent au moins un magasin (SR1) possédant des cartes de circuit (CB1 à CB9) qui sont interconnectées au moyen du support d'un fond de panier (101) dans le magasin et qui portent des processeurs (DSP11 à DSP15) possédant des points d'accès (SAP11 à SAP14), dans lequel le procédé comprend le choix desdits deux dispositifs de fonction au travers du même point d'accès dans un des processeurs.

16. Procédé selon la revendication 11, **caractérisé en ce que** les porteurs desdits dispositifs de fonction (F21 à F28, CP21 à CP27) comprennent au moins un magasin (SR1) possédant des cartes de circuit (CB1 à CB9) qui sont interconnectées au moyen du support d'un fond de panier (101) dans le magasin et qui portent des processeurs (DSP11 à DSP15) possédant des points d'accès (SAP11 à SAP14), dans lequel le procédé comprend le choix desdits deux dispositifs de fonction premièrement (153) sur la même carte de circuit et deuxièmement (152) dans le même magasin.

17. Procédé selon la revendication 11, **caractérisé en ce que** les porteurs desdits dispositifs de fonction (F21 à F28, CP21 à CP27) comprennent au moins un magasin (SR1) possédant des cartes de circuit (CB1 à CB9) qui sont interconnectées au moyen du support d'un fond de panier (101) dans le magasin et qui portent des processeurs (DSP11 à DSP15) possédant des points d'accès (SAP11 à SAP14), dans lequel le procédé comprend le choix desdits deux dispositifs de fonction premièrement (131) en accédant par l'intermédiaire du même point d'accès (SAP11), deuxièmement (131) de manière à ce qu'ils soient pris en charge par le même processeur (DSP101), troisièmement (133) de manière à ce qu'ils soient pris en charge par des processeurs sur la même carte de circuit (CB10), et quatrièmement (134) à partir de cartes de circuit qui sont placées dans le même magasin (SR1).

18. Procédé selon l'une quelconque des revendications 12 à 17, **caractérisé en ce que** l'une des cartes de circuit (CB1) porte des dispositifs de fonction (F21) qui possèdent seulement un type de fonction.

19. Procédé selon l'une quelconque des revendications 12 à 17, **caractérisé en ce que** l'une des de circuit (CB1) porte des dispositifs de fonction (F21, F22) qui possèdent au moins deux types différents de fonction.

20. Procédé concernant des systèmes de télécommunications possédant au moins deux noeuds de couplage (MG1, MG2) selon la revendication 1 destinés à coupler une connexion dans le système de télécommunications (TS), **caractérisé en ce que** le procédé comprend le choix (135 ; 141 ; 151) desdits deux dispositifs de fonction à partir du même noeud (MG1).
